# EUROPEAN PATENT SPECIFICATION

(11) **EP 1 835 002 B1**
(45) Date of publication and mention of the grant of the patent: **23.07.2014**
(21) Application number: 07356034.4
(22) Date of filing: 12.03.2007
(51) Int. Cl.: C09D 183/08, C09D 183/04, B32B 27/28, C08J 5/18, C08J 7/04, C08K 5/54, C09D 4/00, C09D 5/00

(54) **Non-stick ceramic coating composition and process**
Zusammensetzung und Verfahren für keramische Antihaftbeschichtungen
Composition de revêtement céramique non collante et procédé

(30) Priority: 14.03.2006 US 782015 P; 20.04.2006 US 793504 P; 14.07.2006 US 457503; 16.10.2006 CN 200610136010
(43) Date of publication of application: 19.09.2007
(73) Proprietor: Cerasol Hong Kong Limited, Kwun Tong Hong Kong (CN); Bröcker Development B.V., 2242 ED Wassenaar (NL); Kim, Sang Mok, Nam-Gu Incheon (KR)
(72) Inventor: Jeon, Bong Yeol, Incheon, (KR); Kim, Sang Mok,, Nam-Gu, Incheon, (KR)
(74) Representative: Lecomte & Partners

(56) References cited:
- EP-A- 1 526 119
- JP-A- 2003 164 379
- JP-A- 2004 035 313
- KR-A- 20010 057 553

## Description

### BACKGROUND OF INVENTION

### FIELD OF THE INVENTION

The present invention relates to non-stick ceramic coating compositions and methods for making same, and for coating utensils or cookware made of stainless steel, aluminum, aluminum alloy, cast iron or steel.

### PRIOR ART

Considerable effort has been directed at producing an effective, non-stick and non-wetting coating on a substrate that constitutes the surface of cookware for preparing food. The term "non-stick" signifies a surface that resists adherence of substances, such as oils, greases, or other food items. This property permits easy cleaning of dishes in which foods are prepared by heating. The term "non-wetting" indicates a surface that repels liquids such as water. The property is evidenced by a large contact angle between a drop of water and the surface on which the drop rests. An advancing angle of at least 90.degree, is considered as representative of a non-wettable surface.

Non-stick, non-wetting articles are commonly produced by coating article surfaces with a polytetrafluoroethylene (PTFE) layer. For example, U.S. Pat. No. 4,683,168 (Hares et al.) describes a process for coating glass or glass-ceramic articles with such a layer to produce non-stick cooking utensils. However, PTFE coatings exhibit the disadvantage of being opaque. Also, they require a thermal sintering process at 350.degree.-400.degree. C. for their production, are relatively expensive to produce, and do not provide a desired degree of abrasion resistance.

U.S. Pat. No. 4,275,118 to Baney et al. describes a coating composition comprising an acidic dispersion of colloidal silica in an alcohol-water medium which produces a hard, abrasion-resistant coating.

U.S. Pat. No. 6,054,522 to Alain et al. discloses a protective coating which imparts non-stick, abrasion and hydrophobic properties with an inorganic network from metal alkoxides and an organic network from silanes via a sol-gel process. But this coating is very thin, which is not good as a protective coating, and also, has no color. These PTFE coatings have a finite life due to their organic makeup. Over time, these coatings dry out and lose their lubricity.

JP 2003-164379 discloses a member for cooking equipment improved in stain resistance against lamp black and overboiled soup decomposition products during cooking and improved in heat resisting properties. The member is provided with a metal oxide film prepared by forming hydroxy groups on the surface of a metal oxide layer of a base material and then forming a water repellent layer of only fluoroalkylsilane or only an alkylalkoxysilane.

Various processes and materials have been proposed to create a non-stick coating. However, a problem persists regarding wear during use, in particular, scratching by cleaning agents.

### SUMMARY OF THE INVENTION

It is, therefore, a principal object of the present invention to provide a novel coating composition, method of making same and method of applying that will result in a greater abrasion resistance, increased surface hardness, and longer wear.

On the first aspect of the present invention, a non-stick coating composition was provided, which comprises two superimposed layers, a base layer for applying to a substrate and a top layer, the base layer is composed of a matrix comprising the condensation reaction product of a silica sol and an organoalkoxysilane; and the top layer is composed of a matrix comprising the condensation reaction product of a silica sol and an organoalkoxysilane wherein the organoalkoxysilane includes a minor portion of a fluoroalkoxysilane.

Preferably, the fluoroalkoxysilane is present from about 0.3wt% to about 2wt%, the organoalkoxysilane is methyltrimethoxysilane, the silica sol is present in an amount from 30wt% to about 70wt%, and the methyltrimethoxysilane is present in an amount from 2wt% to 40wt%.

The non-stick coating composition further includes a catalyst in an amount form 0wt% to about 2wt%.

The non-stick coating composition further includes a solvent in an amount from 10wt% to 40wt%.

On the second aspect of the present invention, a method of making a non-stick ceramic coating for a substrate, such as a cooking utensil, was provided, which comprises the steps of:
a. making a first component by
   I. adding a colloidal silica sol to an organoalkoxysilane and a catalyst to effect a condensation reaction;
   ii. adding a solvent;
   iii. adding a color material in particulate form;
   iv. mixing to form a first stable binder solution;
b. making a second component by;
   i. adding an organoalkoxysilane and a catalyst, said organoalkoxysilane including a minor portion of fluoroalkoxysilane;
   ii. adding a solvent;
   iii. mixing to form a second stable binder solution ;
c. mixing the two components; and
d. aging the mixed two components whereby the aged two component solution is coated on a substrate.

Preferably, the organoalkoxysilane is methyltrimethoxysilane, wherein the second stable binder solution includes polydimethylsiloxane.

On the third aspect of the present invention, a method of coating a substrate with a non-stick ceramic coating was provided, which comprises the steps of:
a.preparing a substrate by
   i. removing dust and oil from the substrate surface to be coated;
   ii. drying the substrate surface;
   iii. roughening the substrate surface to substantially increase its area;
   iv. cleaning the substrate surface and preheating the substrate surface;
b.coating the substrate surface with a first coating comprising a matrix of a condensation reaction product of a silica sol and an organoalkoxysilane, solvent and a color material; and
c.coating the substrate with a second coating comprising a matrix of a condensation reaction product of a silica sol and an organoalkoxysilane containing a minor portion of fluoroalkoxysilane, and a catalyst while the first coating is still wet;
d.and drying in air.

Preferably, the coating is sprayed onto the substrate and heated to 120 °C to 300 °C for 10 to 30 minutes, the fluoroalkoxysilane is present from about 0.3wt% to about 2wt%, the organoalkoxysilane is methyltrimethoxysilane, the silica sol is present in an amount from 30wt% to about 70wt%, and the methyltrimethoxysilane is present in an amount from 2wt% to 40wt%, a catalyst is present in an amount form 0wt% to about 2wt%.

The method of coating a substrate with a non-stick ceramic coating further includes a solvent in an amount from 10wt% to 40wt%.

On the fourth aspect of the present invention, a non-stick ceramic coated substrate was provided, which comprises:
a. a substrate having a surface to be coated;
b. a first layer coated on the surface of the substrate to be coated and having an exposed top surface; and
c. a second layer coated on the exposed top of the first layer and having an exposed top surface serving as a non-stick ceramic surface suitable for cooking food;
d. said first layer comprised of a lower portion in contact with the surface of said the substrate and being composed of a SiO₂ matrix resulting from the condensation of a colloidal silica sol and an organoalkoxysilane; and the upper portion of the first layer being composed of a SiO₂ matrix resulting from the condensation of a colloidal silica sol and an organoalkoxysilane containing a minor portion of polydimethylsiloxane;
e. said second layer comprised of a SiO₂ matrix resulting from the condensation of a colloidal silica sol and an organoalkoxysilane containing a minor portion of polydimethylsiloxane, and a minor portion of fluoroalkoxysilane.

Preferably, the fluoroalkoxysilane is present from about 0.3wt% to about 2wt%, the organoalkoxysilane is methyltrimethoxysilane, the silica sol is present in an amount from 30wt% to about 70wt%, and the methyltrimethoxysilane is present in an amount from 2wt% to 40wt%.

The coated substrate further includes a catalyst in an amount form 0wt% to about 2wt%.

The coated substrate further includes a solvent in an amount from 10wt% to 40wt%.

The beneficial effects of the present invention are summarized as follows:
1. The novel non-stick coating composition includes a SiO₂ ceramic matrix that includes the condensation product of hydrolyzed alkoxysilane and a colloidal silica sol, which is very stable.
2. The novel non-stick coating composition is abrasion-resistant and hard, by which the coating formed can show a greater abrasion resistance, an increased surface hardness, and a longer wear.
3. The novel non-stick coating composition has a good adhesive force on the substrate.
4. The top layer is coated on the base layer in the wet state, just after coating the base layer onto the substrate. This enables some of the solutions of the top layer to diffuse and/or saturate into the upper portion of the solutions constituting the base layer and enhances the upper portion (PDMS+SiO₂) of the base layer. This diffusion and/or saturation give the structure's non-stick properties greater durability.

Other and further object of the present invention will become apparent from the following detailed description of the invention when taken in conjunction with the appended drawings.

### BRIEF DESCRIPTION OF THE DRAWINGS

FIG. 1 is a diagram illustrating a stable state of silica sol particles showing how electrostatic repulsion occurs whereby the particles make a stable dispersion.

Fig. 2 is a diagram illustrating the condensation mechanism of organoalkoxysilane with a colloidal silica sol.

Fig. 3 is a TEM picture of a reacted first binder, consisting of an organoalkoxysilane condensed with colloidal silica sol.

Fig. 4 is a block diagram showing the novel method for making a coating solution according to the present invention.

Fig. 5 is a block diagram showing the method of pretreatment of a substrate surface.

Fig. 6a is vertical section of a non-stick ceramic coating comprised of two layers in accordance with the present invention.

Fig. 6b is vertical section of the non-stick ceramic coating shown in Fig. 6a showing in more detail the composition and arrangement of the two layers in accordance with the present invention.

Fig. 7a is a picture of the test result of the mechanical property regarding abrasion resistance of the novel two layer non-stick ceramic coating of the invention.

Fig. 7b is a picture of the test result of the mechanical property regarding scratch resistance of two layer non-stick ceramic coating of the invention.

### DETAILED DESCRIPTON OF PREFERRED EMBODIMENTS OF THE INVENTION

Referring now to the drawings, there will be described novel abrasion resistant and high hardness non-stick coatings primarily for cookware, although they have other industrial and commercial uses. The novel coating includes a SiO₂ ceramic matrix that includes the condensation product of hydrolyzed alkoxysilane and a colloidal silica sol. A series of new abrasion resistant and high hardness non-stick coating materials have been developed with ceramic matrix and organic compounds by sol-gel process.

This non-stick material has two main component of silicon dioxide. One is silica sol which is pure SiO₂, another is an organoalkoxysilane which is an organic-inorganic hybrid material. Both materials can make strong chemical bond from chemical reaction, condensation. (OR')₄₋ₓ groups are hydrolyzed with water and then make condensation with silica sol and each other. The ceramic non-stick hybrid coating is applied by a sol-gel process. Two kinds of non-stick organic compounds make a chemical bond with silica ceramic network or matrix and it can exist in the ceramic structure in a stable state.

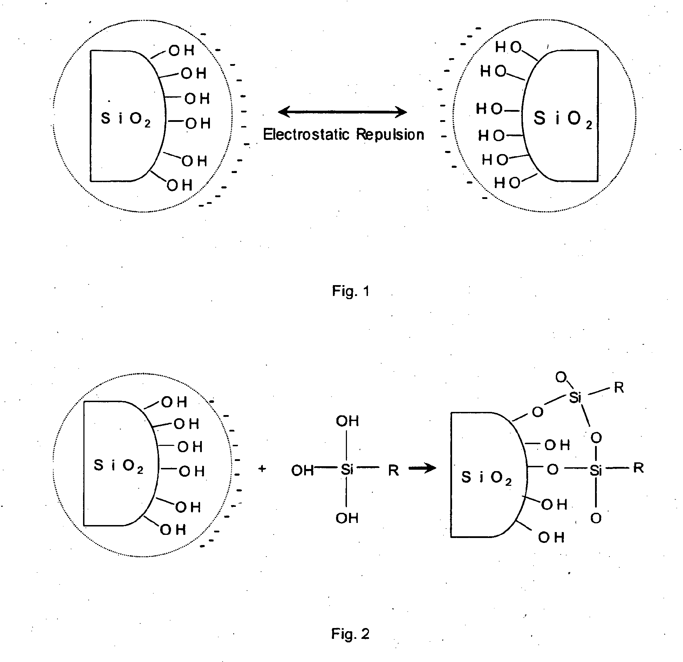

The main matrix is composed of a network of silica formed by the chemical reaction or condensation of colloidal silica sol (water base) and an organoalkoxysilane such as MTMS (methyltrimethoxysilane). The colloidal silica sol is a very stable state because of the electrostatic repulsion of silica particle surface. This is illustrated in Fig. 1 of the drawing. The organoalkoxysilane preferably has the general formula:

RₓSi(OR')₄₋ₓ

Wherein R is one or more organic radicals chosen independently from among methyl, ethyl, and propyl, R' is a low molecular weight alkyl radical, and x is at least one and less than four. Commonly x is one, so that the organoalkoxysilane has three hydrolysable sites. This increases cohesion and bonding of the components and also provides a thickened layer and increases the links with the inorganic silica surface. These sites are hydrolyzed by the water that is in silica sol with an acidic catalyst. The colloidal silica sol is acidified with a mineral or organic acid to reduce the pH below approximately 4. Fig. 2 shows the condensation reaction between colloidal silica sol and hydrolyzed organoalkoxysilane. Examples of operable acids include hydrochloric acid, nitric acid, sulfuric acid, formic acid, propionic acid and acetic acid.

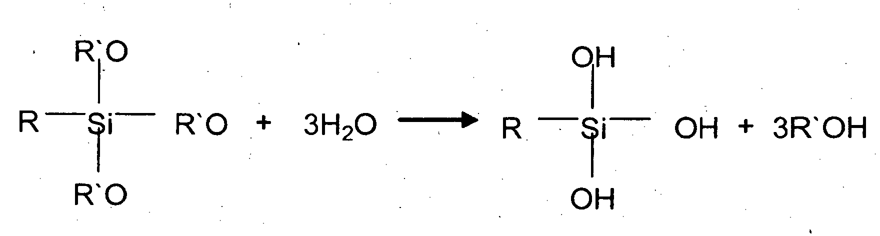

Hydrolyzed hydroxyl groups of organoalkoxysilane make a strong oxygen bond with each other and also can connect on the silica surface.

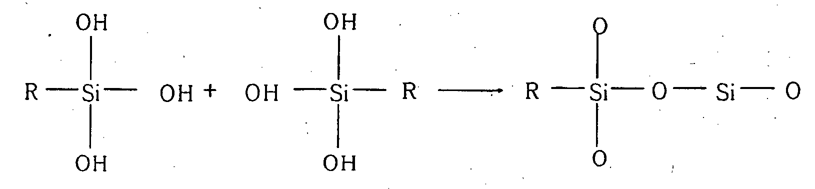

Adding the acidic catalyst puts the reacted solution in acidic state below pH 4. In this pH condition, colloidal silica sols can effect condensation with each other, but the existence of reacted organoalkoxysilanes on the sol surface can reduce the possibility of the sol condensation, which can increase the storage time of the solution. The weight proportion of organoalkoxysilane in the matrix composition to the silica sol can vary. For example, the organoalkoxysilane can be about from 5wt% to 50wt% of silica sol.

Alcoholic solvent is added in the mixture of silica sol and organoalkoxysilane, for example, methanol, ethanol, and propanol. Ethanol or propanol is preferred. The proportion of solvent to the mixture of organoalkoxysilane and silica sol is from 10wt% to 50wt%. This mixed material (matrix), organoalkoxysilane, silica sol and alcoholic solvent, is used as a binder which can maintain a stable state at least for three month.

Organoalkoxysilane, silica sol and alcohol can't make any structure of film per se, in other words, each material by itself cannot function as the binder. Some amount of silica sol and organoalkoxysilane are mixed and chemically react. In this reaction, alcohol solvent is necessary. Binder means the reacted material of silica sol and organoalkoxysilane in the alcoholic solvent base.

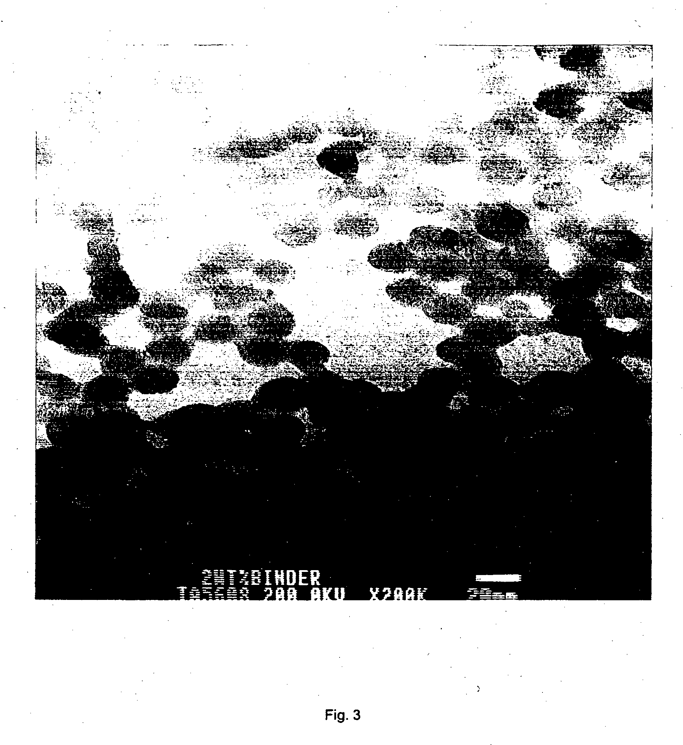

The surface of colloidal silica is coated by organoalkoxysilanes, in other words, hydrolyzed organoalkoxysilane make a thin layer or coating on the silica surface as a result of the condensation reaction with the hydroxyl groups of the silica surface. Fig. 3 shows a TEM illustrating the structure of organoalkoxysilane coated silica sol whereby stable organoalkoxysilane layers are formed on the silica particles. The layer or coating can prevent the cohesion among the silica particles and also serves to bridge each particle with other organoalkoxysilanes.

Same or different organoalkoxysilanes, e.g., fluoroalkoxysilane (FAS) and PDMS (polydimethylsiloxane) are applied to the described matrix system. FAS (Fluoroalkoxysilane) and PDMS (polydimethylsiloxane) have good non-stick properties and also make a strong chemical bond with organoalkoxysilane. The chemical formula of both materials is as below,

### PDMS (polydimethylsiloxane) HO[OSi(CH₃)₂]ₓOH

PDMS has similar a back bone structure to the main matrix of SiO₂ and it's terminal hydroxyl chains can react via condensation with hydrolyzed organoalkoxysilane and the silica surface. Because PDMS also has a good hydrophobic property, it can push out water from the matrix so that it can reduce the capillary stress and possibility of crack during drying procedure. Good thermal stability permits PDMS to use high temperature application with ceramic matrix.

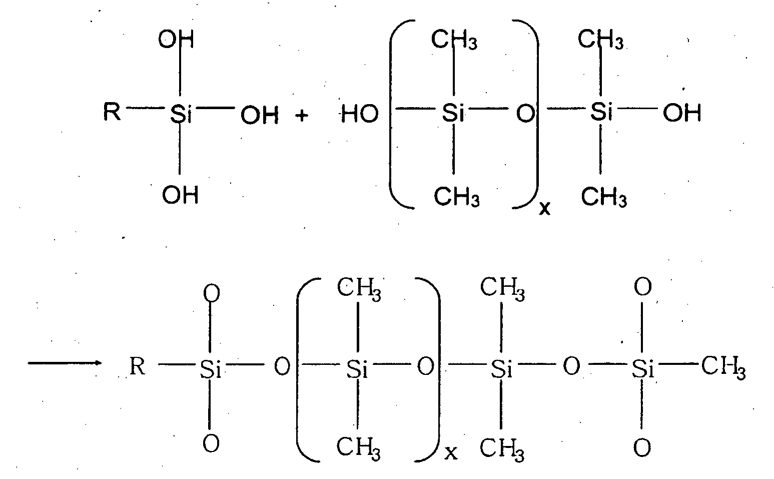

The molecular weight of PDMS is varies from 400 to 6000. The number of CH3-Si-CH3 monomers in the chain determines the PDMS molecular weight and this chain helps the structure to have good non-stick properties. PDMS can make a strong chemical bond with silica sol surface and added organoalkoxysilane.

PDMS can make the chemical bond with the silica sol and the silane network, but there is some limitation for substitution.

In the method of the invention silanes are added twice. In a first step or stage, silanes are added with only catalyst, but in the second step, silanes are added with catalyst and additives. In this second step, the invention uses PDMS and FAS for their non-stick properties. Additives and some amount of silane can be substituted.

The invention employs a two layer coating system, a base layer and a top layer. In the base layer only PDMS is used as a non-stick additive, the substituted amount is from 5 to 20 weight %. In the top layer PDMS and FAS are used as the non-stick additives. 5-20 weight % of silanes are substituted with PDMS and 0.5~12 wt% of silanes are substituted with FAS.

Epoxy silane having epoxy groups that have good adhesion properties with metal substrate can be added. Also these groups can increase the flexibility of the matrix structure. Some amount of MTMS silane can be substituted with Epoxy silane. In the base layer 5~50 wt% of silanes can be substituted with epoxy silane at the first step. 5~30 wt% can be substituted at the second step.

FAS is the silane having the formula RxSi(OR')4-x, R is chosen independently and partially or totally substitute by fluorine atoms. Alkoxy(OR') chains of FAS are hydrolyzed and react via condensation with the silica sol surface and organoalkoxysilane matrix.

### FAS(Fluoroalkoxysilane) CF₃(CF₂)ₙ(CH₂)ₘSi(OR')

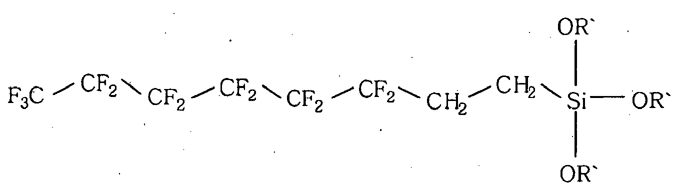

The fluoro chain of FAS increases the non-stick properties of the structure and the three alkoxy chains make a strong and stable oxygen bond with the ceramic network (matrix).

FAS and PDMS play an important role as hardeners with additional organoalkoxysilane in the first mixed solution. Alkoxy chains of the organoalkoxysilane, FAS and PDMS, are hydrolyzed and react via condensation with the hydroxyl groups of silica sol and previously added organoalkoxysilane.

All kinds of material can be a substrate, for example, all kinds of metal, plastic, stone, glass and so on. But all substrates must be prepared by a sand blasting procedure, as will be described. Especially metal has a low surface hardness and strength, because of this disadvantage, ceramic coatings on metal substrate are very efficient. Aluminum is the most popular metal element for a substrate and it has good adhesion properties with the novel ceramic coating of the present invention.

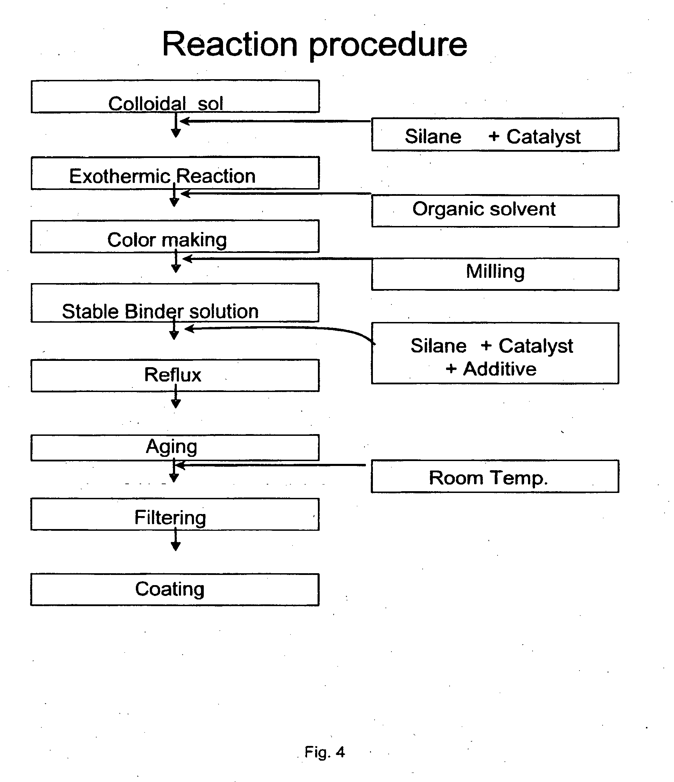

Fig. 4 shows a block diagram setting out the chemical reaction procedure of the non-stick ceramic coating solution. Shown are the method steps for making the composition of the invention, i.e., the procedure of the reaction from the raw materials. As shown in this block diagram, silane is added twice at different stages. As shown in Fig. 4, first the silica sol is made, then silane and catalyst are added and the exothermic reaction takes place. Then the organic solvent is added and the color is added in color making. Then milling takes place and a stable binder solution results. Next silane and catalyst are added and reflux takes place. The binder is aged and then brought to room temperature and filtering takes place. Finally the composition is ready and coating takes place.

In one form of the invention, the compositions are prepared in kit form. Actually, this product is produced as two types of solutions, A solution and B solution. In other words, this non-stick ceramic solution can be sold in a kit form with 2 bottles. At first, the A solution is made, which has the color of the coating, and then, B solution is made, which is transparent. Solutions A and B are wrapped separately in bottles or any suitable containers. The final customer must mix the A and B solutions, must do the last reflux procedure. At the first stage for making A solution, no non-stick additives are used. The proportions of sol and silane are shown the following table. For the second stage, making the B solution, FAS and PDMS are used with silane as shown the table.

| | | | | |
|---|---|---|---|---|
| Proportion of A solution | Silica sol | MTMS | Catalyst | Solvent |
| | 30wt% ~ 70wt% | 2wt% ~ 40wt% | 0wt% ~ 2wt% | 10wt% ~ 40wt% |
| Proportion of B solution | MTMS | FAS | PDMS | Catalyst |
| | 75wt% ~ 99wt% | 0.3wt% ~ 2wt% | 5wt% ~ 20wt% | 0wt% ~ 3wt% |

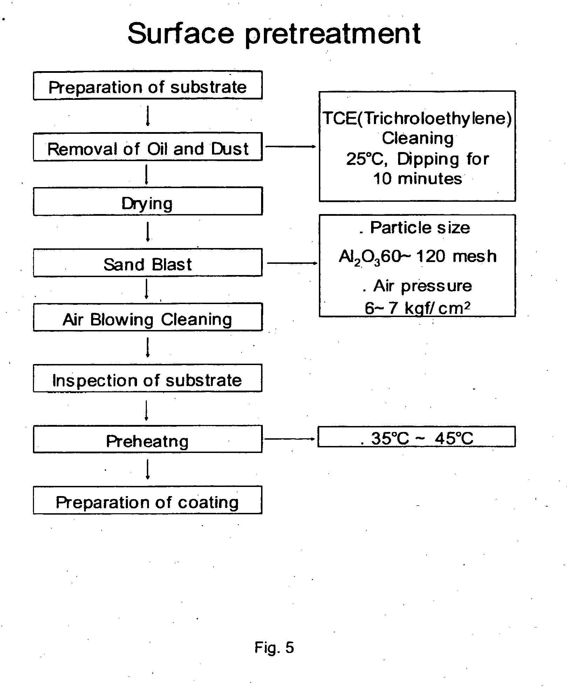

The coating solution is applied to the surface of a suitable substrate to make a non-stick property on the surface of substrate. To make good adhesion and homogeneous surface particular pretreatment must be done. Fig. 5 shows in block diagram the surface pretreatment of the substrate. The first step is to prepare the substrate. Next the oil and dust are removed from the substrate using TCE (trichloroethylene) cleaning by heating to 25 °C and dipping for 10 minutes. Next the substrate is dried and then sand blasted using Al₂O₃ of a particle size 60 to 120 mesh, using air pressure of 6 - 7 kgf/cm² in order to roughen the surface and increase its area substantially. Thereafter, the substrate is blown clean using suitable air pressure. The substrate is inspected and then preheated to 35 °C to 45 °C. The surface of the substrate is now ready for coating. The amount of surface area and state of the surface area are most important variables for ceramic coating. High surface area gives a substrate enough surface energy to provide a high adhesion force. To make this high surface area the 60 to 120 mesh sand blast isy used after the surface has been freed of dust and oil. TCE (trichroloethylene) is used to degrease oil and dust on the substrate surface.

In the procedure block diagram there is an color making step. This step includes the "milling" step. Many kinds of inorganic pigment are used for the color. 60wt% ~ 80wt% of stable binder is mixed with colored inorganic pigment (15wt% ~ 30wt%) and filler (BaSO₄, mica and talc, etc). In the milling step, three types of mills can be used including ball mills, sand mills and ring mills. The color desired is obtained in the known way from the various kinds of pigments presently known and used in the art. After refluxing of silica sol and silane with organic solvent, a stable solution reaults, as previously described, which is called "binder".

In the procedure block diagram of Fig. 4, additives are mentioned as being added during the second addition of the silane and catalyst. The main additives are FAS and PDMS for the non-stick properties. However, special functional additives may be added per a customer's request. For example, if customer wants a negative ion emission effect, a substance can be added in order to produce the requested effect of making negative ions.

All the chemical reactions should be done in acidic condition, below pH 4.5 and greater than pH 2.0 and preferably at room temperature. For the acid catalyst commonly known organic and inorganic acid catalysts are used. Actually, most of the reaction is exothermic, so the solution temperature is nearly 60 °C. To get the good adhesive force on the substrate, a preheating procedure is necessary, for example, 35°C-45°C preheating temperature will result in a good adhesion property and also, increase the coating thickness of the ceramic coating on, for example, an aluminum substrate.

The techniques for forming the non-stick ceramic coating include painting, spinning, dipping and spraying. The most efficient technique is spray coating. The solution is then heated at 120°C ~ 300 °C for 10 ~ 30 minutes to remove water and organic solvent and to increase the density of the inorganic structure. The final coated product must be cooled at room temperature in the air.

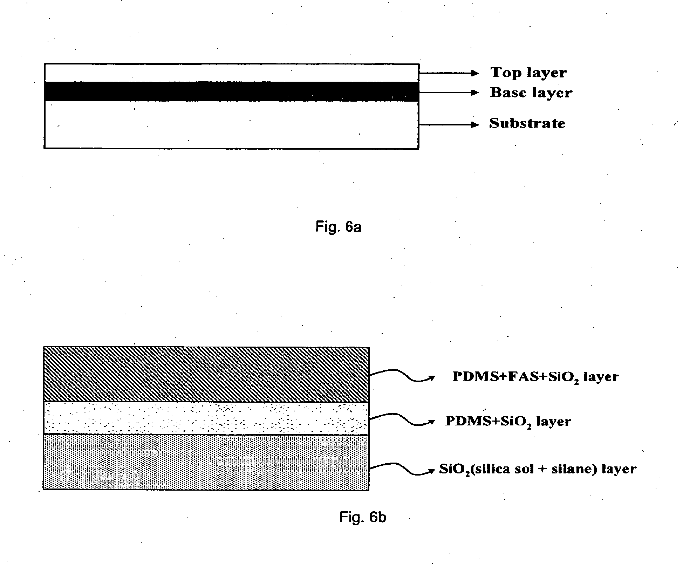

To obtain a good non-stick coating which has a sufficient mechanical property, two layers coating should be carried out. Fig. 6a shows the structure of these two layers, identified as a top layer and a base layer directly contacting the substrate. As shown in Fig. 6b, the base layer is composed principally of the silica and organoalkoxysilane hybrid network or matrix. As previously described, some PDMS is substituted for some silane in the base layer. As the PDMS has a lower specific gravity than the matrix solution, the PDMS will rise to the top of the base layer and float at the top so that the base layer becomes a distinct lower portion consisting of SiO₂ (silica sol and silane) and distinct upper portion consisting of PDMS and SiO₂ (silica sol and silane) at the top of the base layer. Some amount of organoalkoxysilane in the base layer can be substituted to increase the adhesion power with substrate, for example, epoxy silane can be substituted to increase the adhesion property for an aluminum substrate, in which case the epoxy silane will be present in the lower portion of the base layer. The lower portion of the base layer contains silica sol and organoalkoxysilane, in order to make a good adhesion with the substrate, whereas the upper portion of the base layer contains PDMS, in order to make a contribution to the non-stick function of the structure. The base layer can be a colored layer as previously described.

The top layer is a transparent film which has both non-stick materials in the structure and also provides a very hard surface. PDMS make a two oxygen bridge with the main matrix and PDMS can give flexibility of the ceramic matrix. FAS can make three oxygen bridges with main matrix, so it can make the structure of the top layer harder than the base layer. The color pigments present in the base layer tend to have a large particle size. Accordingly, keeping the top layer transparent enables the top layer to have much better mechanical properties than the colored base layer. This top layer is characterized by excellent non-stick performance and mechanical properties, and overcomes the disadvantages of prior art non-stick coatings.

The top layer is coated on the base layer in the wet state, just after coating the base layer onto the substrate. This enables some of the solutions of the top layer to diffuse and/or saturate into the upper portion of the solutions constituting the base layer and enhances the upper portion (PDMS+SiO₂) of the base layer. This diffusion and/or saturation give the structure's non-stick properties greater durability.

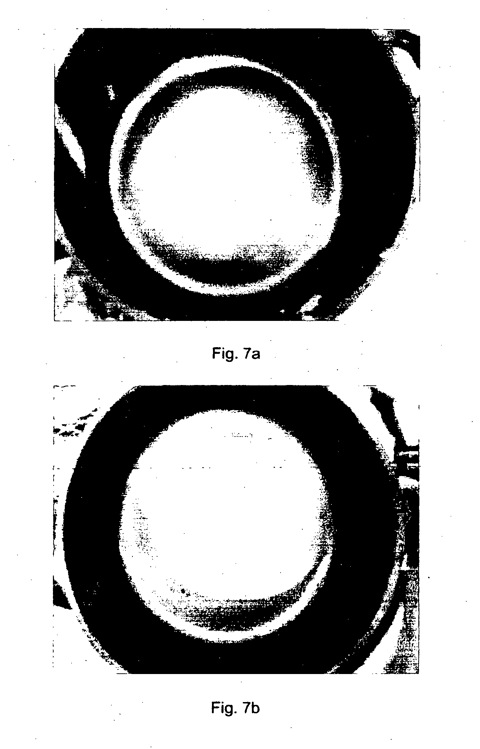

Figs. 7a and b show pictorially the abrasion and scratch test results, respectively. Fig. 7a is shows the result of a NORD test for abrasion with pancake. Fig. 7b shows the result of a MTP test for scratch resistance. Whereas a PTFE coating, according to the prior art only has a surface of 3H-4H pencil hardness, the ceramic non-stick coating of the present invention has a surface of more than 9H pencil hardness.

## Claims

1. A non-stick coating comprising;
two superimposed layers, a base layer for applying to a substrate and a top layer;
the base layer composed of a matrix comprising the condensation reaction product of a silica sol and an organoalkoxysilane; and
the top layer composed of a matrix comprising the condensation reaction product of a silica sol and an organoalkoxysilane wherein the organoalkoxysilane includes a minor portion of a fluoroalkoxysilane.

2. A non-stick coating according to claim 1 wherein the fluoroalkoxysilane is present from 0.3wt% to 2wt%.

3. A non-stick coating according to claim 1 or claim 2 wherein the organoalkoxysilane is methyltrimethoxysilane.

4. A non-stick coating according to claim 3 wherein the silica sol is present in an amount from 30wt% to 70wt%, and the methyltrimethoxysilane is present in an amount from 2wt% to 40wt%.

5. A non-stick coating according to any one of claims 1 to 4 wherein a catalyst is present in an amount from 0wt% to 2wt%.

6. A non-stick coating according to any one of claims 1 to 5 further including a solvent in an amount from 10wt% to 40wt%.

7. A method of coating a substrate with a non-stick ceramic coating comprising the steps of:
a. preparing a substrate by
I. removing dust and oil from the substrate surface to be coated;
II. drying the substrate surface;
III. roughening the substrate surface to substantially increase its area;
IV. cleaning the substrate surface and preheating the substrate surface;
b. coating the substrate surface with a first coating comprising a matrix of a condensation reaction product of a silica sol and an organoalkoxysilane, solvent and a color material; and
c. coating the substrate with a second coating comprising a matrix of a condensation reaction product of a silica sol and an organoalkoxysilane containing a minor portion of fluoroalkoxysilane and a catalyst while the first coating is still wet; and
d. drying in air.

8. A method of coating a substrate with a non-stick ceramic coating according to claim 7 wherein the coating is sprayed onto the substrate and heated to 120 °C to 300 °C for 10 to 30 minutes.

9. A method of coating a substrate with a non-stick ceramic coating according to claim 8 or claim 8 wherein the fluoroalkoxysilane is present from 0.3wt% to 2wt%.

10. A method of coating a substrate with a non-stick ceramic coating according to any one of claims 7 to 9 wherein the organoalkoxysilane is methyltrimethoxysilane.

11. A method of coating a substrate with a non-stick ceramic coating according to claim 10 wherein the silica sol is present in an amount from 30wt% to 70wt%, and the methyltrimethoxysilane is present in an amount from 2wt% to 40wt%.

12. A method of coating a substrate with a non-stick ceramic coating according to any one of claims 7 to 11 wherein a catalyst is present in an amount from 0wt% to 2wt%.

13. A method of coating a substrate with a non-stick ceramic coating according to any one of claims 7 to 12 further including a solvent in an amount from 10wt% to 40wt%.

14. A non-stick ceramic coated substrate comprising a substrate having a surface to be coated and a non-stick coating according to any one of claims 1-7.

15. A coated substrate according to claim 15 wherein the base layer of the coating is comprised of a lower portion being in contact with the surface of said substrate and being composed of a SiO₂ matrix resulting from the condensation of a colloidal silica sol and an organoalkoxysilane and an upper portion being in contact with the top layer of the coating and being composed of a SiO₂ matrix resulting from the condensation of a colloidal silica sol and an organoalkoxysilane containing a minor portion of polydimethylsiloxane, and wherein the top layer of the coating is comprised of a SiO₂ matrix resulting from the condensation of a colloidal silica sol and an organoalkoxysilane containing a minor portion of polydimethylsiloxane, and a minor portion of fluoroalkoxysilane, and has an exposed top surface serving as a non-stick ceramic surface suitable for cooking food.

## Patentansprüche

1. Antihaftbeschichtung, umfassend:
zwei übereinanderliegende Schichten, eine Basisschicht zum Aufbringen auf einem Substrat, und eine Deckschicht;
wobei die Basisschicht aus einer Matrix besteht, die das Kondensationsreaktionsprodukt eines Silika-Sols und eines Organoalkoxysilans umfasst; und
die Deckschicht aus einer Matrix besteht, die das Kondensationsreaktionsprodukt eines Silika-Sols und eines Organoalkoxysilans umfasst, wobei das Organoalkoxysilan einen geringen Anteil eines Fluoralkoxysilans beinhaltet.

2. Antihaftbeschichtung nach Anspruch 1, wobei das Fluoralkoxysilan von 0,3 Gew.% bis 2 Gew.% vorhanden ist.

3. Antihaftbeschichtung nach Anspruch 1 oder Anspruch 2, wobei das Organoalkoxysilan Methyltrimethoxysilan ist.

4. Antihaftbeschichtung nach Anspruch 3, wobei das Silika-Sol in einer Menge von 30 Gew.% bis 70 Gew.% vorhanden ist und das Methyltrimethoxysilan in einer Menge von 2 Gew.% bis 40 Gew.% vorhanden ist.

5. Antihaftbeschichtung nach einem der Ansprüche 1 bis 4, wobei ein Katalysator in einer Menge von 0 Gew.% bis 2 Gew.% vorhanden ist.

6. Antihaftbeschichtung nach einem der Ansprüche 1 bis 5, weiter ein Lösungsmittel in einer Menge von 10 Gew.% bis 40 Gew.% beinhaltend.

7. Verfahren zur Beschichtung eines Substrats mit einer keramischen Antihaftbeschichtung, umfassend die Schritte des:
a. Herstellens eines Substrats durch
I. Entfernen von Staub und Fett von der zu beschichtenden Substratoberfläche;
II. Trocknen der Substratoberfläche;
III. Aufrauhen der Substratoberfläche, um ihre Fläche im Wesentlichen zu vergrößern;
IV. Reinigen der Substratoberfläche und Vorerwärmen der Substratoberfläche;
b. Beschichtens der Substratoberfläche mit einer ersten Beschichtung, die eine Matrix aus einem Kondensationsreaktionsprodukt eines Silika-Sols und eines Organoalkoxysilans, Lösungsmittel und einen Farbstoff umfasst; und
c. Beschichtens des Substrats mit einer zweiten Beschichtung, die eine Matrix aus einem Kondensationsreaktionsprodukt eines Silika-Sols und eines Organoalkoxysilans, das einen geringen Anteil Fluoralkoxysilan enthält, und einem Katalysator umfasst, während die erste Beschichtung noch nass ist; und
d. Lufttrocknens.

8. Verfahren zur Beschichtung eines Substrats mit einer keramischen Antihaftbeschichtung nach Anspruch 7, wobei die Beschichtung auf das Substrat aufgesprüht und 10 bis 30 Minuten lang auf 120°C bis 300°C erhitzt wird.

9. Verfahren zur Beschichtung eines Substrats mit einer keramischen Antihaftbeschichtung nach Anspruch 8 oder Anspruch 8, wobei das Fluoralkoxysilan von 0,3 Gew.% bis 2 Gew.% vorhanden ist.

10. Verfahren zur Beschichtung eines Substrats mit einer keramischen Antihaftbeschichtung nach einem der Ansprüche 7 bis 9, wobei das Organoalkoxysilan Methyltrimethoxysilan ist.

11. Verfahren zur Beschichtung eines Substrats mit einer keramischen Antihaftbeschichtung nach Anspruch 10, wobei das Silika-Sol in einer Menge von 30 Gew.% bis 70 Gew.% vorhanden ist und das Methyltrimethoxysilan in einer Menge von 2 Gew.% bis 40 Gew.% vorhanden ist.

12. Verfahren zur Beschichtung eines Substrats mit einer keramischen Antihaftbeschichtung nach einem der Ansprüche 7 bis 11, wobei ein Katalysator in einer Menge von 0 Gew.% bis 2 Gew.% vorhanden ist.

13. Verfahren zur Beschichtung eines Substrats mit einer keramischen Antihaftbeschichtung nach einem der Ansprüche 7 bis 12, weiter ein Lösungsmittel in einer Menge von 10 Gew.% bis 40 Gew.% beinhaltend.

14. Keramisch antihaftbeschichtetes Substrat, umfassend ein Substrat mit einer zu beschichtenden Oberfläche und eine Antihaftbeschichtung nach einem der Ansprüche 1-7.

15. Beschichtetes Substrat nach Anspruch 15, wobei die Basisschicht der Beschichtung aus einem unteren Teil besteht, der mit der Oberfläche des Substrats in Kontakt ist und aus einer SiO₂-Matrix, die aus der Kondensation eines kolloidalen Silika-Sols und eines Organoalkoxysilans resultiert, zusammengesetzt ist, und einem oberen Teil, der mit der Deckschicht der Beschichtung in Kontakt ist und aus einer SiO₂-Matrix zusammengesetzt ist, die aus der Kondensation eines kolloidalen Silika-Sols und eines Organoalkoxysilans, das einen geringen Anteil Polydimethylsiloxan enthält, resultiert, und wobei die Deckschicht der Beschichtung aus einer SiO₂-Matrix besteht, die aus der Kondensation eines kolloidalen Silika-Sols und eines Organoalkoxysilans, das einen geringen Anteil Polydimethylsiloxan, und einen geringen Anteil Fluoralkoxysilan, enthält, resultiert, und eine freiliegende Deckfläche aufweist, die als zum Kochen von Lebensmitteln geeignete keramische Antihaftfläche dient.

## Revendications

1. Revêtement antiadhésif comprenant :
deux couches superposées, une couche de base à des fins d'application sur un substrat et une couche supérieure ;
la couche de base étant composée d'une matrice comprenant le produit de la réaction de condensation d'un sol de silice et d'un organoalcoxysilane ; et
la couche supérieure étant composée d'une matrice comprenant le produit de la réaction de condensation d'un sol de silice et d'un organoalcoxysilane, l'organoalcoxysilane englobant une portion mineure d'un fluoroalcoxysilane.

2. Revêtement antiadhésif selon la revendication 1, dans lequel le fluoroalcoxysilane est présent en une quantité de 0,3 % en poids à 2 % en poids.

3. Revêtement antiadhésif selon la revendication 1 ou 2, dans lequel l'organoalcoxysilane est le méthyltriméthoxysilane.

4. Revêtement antiadhésif selon la revendication 3, dans lequel le sol de silice est présent en une quantité de 30 % en poids à 70 % en poids et le méthyltriméthoxysilane est présent en une quantité de 2 % en poids à 40 % en poids.

5. Revêtement antiadhésif selon l'une quelconque des revendications 1 à 4, dans lequel un catalyseur est présent en une quantité de 0 % en poids à 2 % en poids.

6. Revêtement antiadhésif selon l'une quelconque des revendications 1 à 5, englobant en outre un solvant en une quantité de 10 % en poids à 40 % en poids.

7. Procédé d'enduction d'un substrat avec un revêtement céramique antiadhésif comprenant les étapes consistant à :
a. préparer un substrat
I. en éliminant la poussière et l'huile de la surface du substrat qui doit être enduite ;
II. en séchant la surface du substrat ;
III. en rendant rugueuse la surface du substrat pour augmenter de manière substantielle sa superficie ;
IV. en nettoyant la surface du substrat et en préchauffant la surface du substrat ;
b. enduire la surface du substrat avec un premier revêtement comprenant une matrice d'un produit de la réaction de condensation d'un sol de silice et d'un organoalcoxysilane, un solvant et une matière colorante ; et
c. enduire le substrat avec un deuxième revêtement comprenant une matrice d'un produit de la réaction de condensation d'un sol de silice et d'un organoalcoxysilane contenant une portion mineure de fluoroalcoxysilane, et un catalyseur, tandis que le premier revêtement est toujours humide ; et
d. sécher à l'air

8. Procédé d'enduction d'un substrat avec un revêtement céramique antiadhésif selon la revendication 7, dans lequel le revêtement est pulvérisé sur le substrat et est chauffé jusqu'à une température de 120 °C à 300 °C pendant un laps de temps de 10 à 30 minutes.

9. Procédé d'enduction d'un substrat avec un revêtement céramique antiadhésif selon la revendication 7 ou 8, dans lequel le fluoroalcoxysilane est présent en une quantité de 0,3 % en poids à 2 % en poids.

10. Procédé d'enduction d'un substrat avec un revêtement céramique non adhésif selon l'une quelconque des revendications 7 à 9, dans lequel l'organoalcoxysilane est le méthyltriméthoxysilane.

11. Procédé d'enduction d'un substrat avec un revêtement céramique antiadhésif selon la revendication 10, dans lequel le sol de silice est présent en une quantité de 30 % en poids à 70 % en poids et le méthyltriméthoxysilane est présent en une quantité de 2 % en poids à 40 % en poids.

12. Procédé d'enduction d'un substrat avec un revêtement céramique non adhésif selon l'une quelconque des revendications 7 à 11, dans lequel un catalyseur est présent en une quantité de 0 % en poids à 2 % en poids.

13. Procédé d'enduction d'un substrat avec un revêtement céramique non adhésif selon l'une quelconque des revendications 7 à 12, englobant en outre un solvant en une quantité de 10 % en poids à 40 % en poids.

14. Substrat muni d'un revêtement céramique non adhésif comprenant un substrat possédant une surface à enduire et un revêtement antiadhésif selon l'une quelconque des revendications 1 à 7.

15. Substrat muni d'un revêtement selon la revendication 14, dans lequel la couche de base du revêtement comprend une portion inférieure mise en contact avec la surface du substrat et qui se compose d'une matrice à base de SiO₂ résultant de la condensation d'un sol de silice colloïdale et d'un organoalcoxysilane et une portion supérieure en contact avec la couche supérieure du revêtement et qui se compose d'une matrice à base de SiO₂ résultant de la condensation d'un sol de silice colloïdale et d'un organoalcoxysilane contenant une portion mineure de polydiméthylsiloxane, et dans lequel la couche supérieure du revêtement comprend une matrice à base de SiO₂ résultant de la condensation d'un sol de silice colloïdale et d'un organoalcoxysilane et un organoalcoxysilane contenant une portion mineure de polydiméthylsiloxane, et une portion mineure de fluoroalcoxysilane, et possède une surface supérieure exposée faisant office de surface céramique antiadhésive appropriée pour la cuisson d'aliments.
